**Europäisches Patentamt**

**European Patent Office**

**Office européen des brevets**

(11) Veröffentlichungsnummer: **0 198 177**
**A2**

(12) **EUROPÄISCHE PATENTANMELDUNG**

(21) Anmeldenummer: **86102182.2**

(22) Anmeldetag: **20.02.86**

(51) Int. Cl.⁴: **H04M 15/34**

(30) Priorität: **10.04.85 DE 3512788**

(43) Veröffentlichungstag der Anmeldung:
**22.10.86 Patentblatt 86/43**

(84) Benannte Vertragsstaaten:
**AT BE FR GB IT LU NL**

(71) Anmelder: **Telefonbau und Normalzeit GmbH**
**Mainzer Landstrasse 128-146 Postfach 4432**
**D-6000 Frankfurt (Main)(DE)**

(72) Erfinder: **Ernst, Ralf**
**Am Eichenbühl 87**
**D-6074 Rödermark(DE)**
Erfinder: **Korn, Peter, Dipl.-Ing. (FH)**
**Bahnebredde 29**
**D-4600 Dortmund 50(DE)**

(54) **Verfahren zur Mitteilung von Gesprächsgebühren an Teilnehmer von Fernsprechvermittlungsanlagen, insbesondere Fernsprechnebenstellenanlagen.**

(57) Nach dem Beenden einer besonders gekennzeichneten, gebührenpflichtigen Gesprächsverbindung wird von der zentralen Steuerung einer Vermittlungsanlage aus automatisch eine Verbindungsübertragung belegt, der Teilnehmeranschluß, von wo aus das gebührenpflichtige Gespräch geführt wurde, angerufen und mit der Verbindungsübertragung verbunden, an die eine Ansageeinrichtung angeschlossen ist. Die von der gerade beendeten Gesprächsverbindung stammenden Gebührendaten werden zusammen mit einem Ansagekennzeichen der zentralen Steuerung oder der zentralen Gesprächsdatenerfassung aus über die Verbindungsübertragung zur Ansageeinrichtung übertragen. In der Ansageeinrichtung wird darauf hin ein Ansagetext mit Angabe der Gebühreneinheiten und/oder Geldbeträge zusammengestellt und dem Teilnehmer übermittelt.

EP 0 198 177 A2

Rank Xerox

# Verfahren zur Mitteilung von Gesprächsgebühren an Teilnehmer von Fernsprechvermittlungsanlagen, insbesondere Fernsprechnebenstellenanlagen

Die Erfindung betrifft ein Verfahren zur Mitteilung von Gesprächsgebühren an Teilnehmer von Fernsprechvermittlungsanlagen, insbesondere Fernsprechnebenstellenanlagen nach dem Oberbegriff des Patentanspruches 1.

Aus den TN-Nachrichten 1974, Heft 75 (Seiten 38 bis 44: Zentrale Gesprächsdatenerfassung zur automatischen Auswertung in Datenverarbeitungsanlagen) ist es bekannt, einer Fernsprechnebenstellenanlage eine zentrale Gesprächsdatenerfassung zuzuordnen. Es ist dort im einzelnen beschrieben, welche Daten von jeder einzelnen Verbindung erfaßt werden und wie diese Daten ausgewertet und ausgedruckt werden. Die gesamte Datenausgabe befindet sich an zentraler Stelle, weil nur dort die entsprechenden Aufzeichnung-und/oder Ausgabegeräte installiert sind. Außerdem liegen die Gesprächsdaten nur in schriftlicher Form vor, so daß sie einem Fernsprechteilnehmer nicht unmittelbar zur Verfügung stehen. Nur wenn der Teilnehmeranschluß über entsprechende Endgeräte verfügt, könnte eine unmittelbare Datenübermittlung möglich sein, wie dies beispielsweise beschrieben ist in den TN-Nachrichten von 1970, Heft 70, auf Seite 12. Es handelt sich dabei um eine Fernschreibvermittlungsanlage, wo es möglich ist, dem rufenden Teilnehmer die Kostendaten für eine Verbindung zuzuschreiben.

Es ist außerdem bekannt, an Fernsprechapparaten Gebührenanzeigeeinrichtungen vorzusehen, wofür die Einstelldaten in Form von Impulsen über die Leitung gegeben werden müssen. Neben den altbekannten elektromagnetisch angetriebenen Gebührenzählern sind auch Einrichtungen bekannt, wobei elektronische Steuer-und Speichereinrichtungen im Fernsprechapparat für das Betreiben elektronischer Anzeigemittel zur Gebührenanzeige vorgesehen sind. Derartige Schaltungsanordnungen und Verfahren sind angegeben, in den DE-OS 29 39 010 und 30 35 031. Für eine Gebührenanzeige am Teilnehmerapparat sind also neben den Anzeigeeinrichtungen selbst zusätzliche Schaltmittel erforderlich, um die sogenannten Gebührenimpulse über die Teilnehmeranschlußleitung zum Endgerät zu übertragen. Da eine derartige Impulsübertragung auch während des Gespräches stattfinden muß, z. B. dann, wenn keine zentrale Gesprächsdatenerfassung vorgesehen ist, ist eine außerhalb des Sprachbandes liegende Frequenz erforderlich, wenn nicht zusätzliche Leitungen aufgewendet werden sollen. Bei einer derartigen Gebührenanzeige müssen alle Schaltmittel pro Teilnehmeranschluß aufgewendet werden, so daß erhebliche Kosten entstehen, wenn eine Vielzahl von Teilnehmeranschlüssen, beispielsweise in großen Fernsprechnebenstellenanlagen, mit Gebührenanzeigeeinrichtungen ausgestattet werden sollen.

Die Aufgabe der Erfindung besteht darin, ein Verfahren zur Mitteilung von Gesprächsgebühren an Teilnehmer von Fernsprechvermittlungsanlagen, insbesondere Fernsprechnebenstellenanlagen vorzustellen, bei dem keinerlei Aufwand an der Teilnehmersprechstelle und an den teilnehmerindividuellen Schalteinrichtungen erforderlich sind. Die an zentraler Stelle angeordneten Einrichtungen sollen für alle Teilnehmer, vorbestimmten Bedingungen entsprechend, genutzt werden können. Zur Lösung dieser Aufgabe dient eine Merkmalskombination, wie sie im Patentanspruch 1 angegeben ist.

Damit wird in vorteilhafter Weise erreicht, daß in Zusammenarbeit mit der zentralen Steuerung der Fernsprechvermittlungsanlage und einer dort angeschlossenen zentralen Gesprächsdatenerfassung jedem Teilnehmer automatisch oder auf Anforderung Gebühreninformationen zugesprochen werden können. Je nach den betrieblichen Erfordernissen, kann die Ansage der Gesprächsgebühr von verschiedenen vermittlungstechnischen Kriterien abhängig gemacht werden, wie dies in den Unteransprüchen angegeben ist. Bei den in den Unteransprüchen angegebenen Weiterbildungen der Erfindung ist außerdem im einzelnen erläutert, auf welche Weise die Ansageeinrichtung für die sprachliche Ausgabe von Gebühreninformationen betrieben wird.

Ein Ausführungsbeispiel der Erfindung wird nachfolgend anhand einer Zeichnung näher erläutert.

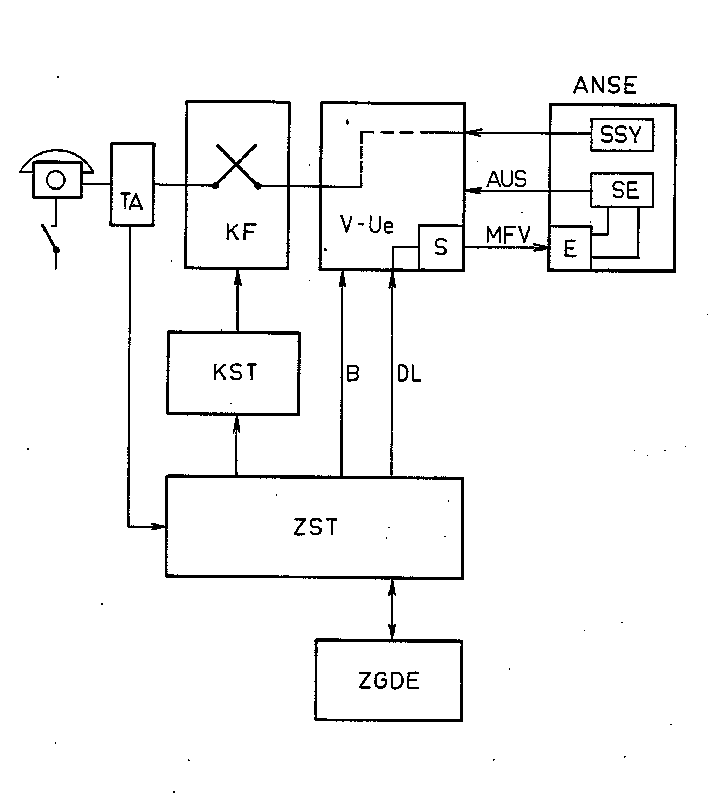

In der Zeichnung ist das Blockschaltbild einer Vermittlungsanlage mit zentraler Steuerung ZST und zentraler Gesprächsdatenerfassung ZGDE dargestellt. Eine Koppelfeldsteuerung KST erhält von der zentralen Steuerung ZST Schaltbefehle für die Einstellung der Sprechwege im Koppelfeld KF. An dieses Koppelfeld sind, wie dies in Fernsprechvermittlungsanlagen, insbesondere Fernsprechnebenstellenanlagen üblich ist, Teilnehmeranschlüsse TA und Verbindungsübertragungen VUe angeschaltet. Solche Verbindungsübertragungen VUe werden erfindungsgemäß dazu benutzt, eine Ansageeinrichtung ANSE mit einem Teilnehmeranschluß TA zu verbinden, damit dem Teilnehmer eine Gebühreninformation zugesprochen werden kann.

Für die Mitteilung von Gesprächsgebühren an die Teilnehmer gibt es mehrere Möglichkeiten. Wenn eine Gesprächsverbindung entsprechend gekennzeichnet ist, beispielsweise durch Einbringen von Merkmal-Bits in einen Verbindungsspeicher, so wird nach dem Beenden eines gebührenpflichtigen Gespräches automatisch eine Gesprächsverbindung zu dem Teilnehmeranschluß TA hin aufgebaut, von wo aus das Gespräch geführt wurde. Dies geschieht dadurch, daß die zentrale Steuereinrichtung ZST die Schaltzustände:Auslösen,gebührenpflichtige Verbindung, gekennzeichnete Verbindung,miteinander verknüpft und auch die Rufnummer des auslösenden Teilnehmers vorüber gehend zwischenspeichert. Es wird dann ein neuer Verbindungsaufbau angereizt, wobei die Verbindungsübertragung VUe ein Belegungssignal B erhält. Über die Koppelfeldsteuerung KST wird im Koppelfeld KF ein Sprechweg zwischen der Verbindungsübertragung VUe und dem Teilnehmeranschluß TA durchgeschaltet, wobei die Rufnummer oder Adresse des Teilnehmeranschlusses TA, der zuvor das Gespräch beendet hatte, für die Markierung im Koppelfeld KF zur Verfügung steht. Nun werden von der zentralen Steuerung ZST aus über eine oder mehrere Datenleitungen DL Gebühreninformationen in die Verbindungsübertragung VUe übertragen. Falls diese Gebühreninformationen bereits in die zentrale Gesprächsdatenerfassung ZGDE übertragen worden sind und nicht mehr in der zentralen Steuereinrichtung ZST zur Verfügung stehen, werden die der Verbindung zugeordneten Daten von der zentralen Gesprächsdatenerfassung ZGDE abgerufen. Eine in der Verbindungsübertragung VUe befindliche Sendeeinrichtung S sendet diese Gebührendaten wortweise als Tonfrequenzimpulse nach dem Mehrfrequenzverfahren MFV zu einem in der Ansageeinrichtung ANSE befindlichen Empfänger E. Diese auf diese Weise wortweise angekommenen Daten werden in der Ansageeinrichtung ANSE zwischengespeichert und in einer dort befindlichen Steuereinrichtung SE verarbeitet. Sie dienen zum Ansteuern einer Sprachsyntheseeinrichtung SSY, die den Eingangssignalen entsprechend zunächst einige Worte eines vorbestimmten Einheitstextes erzeugt und sodann innerhalb dieses Ansagetextes die zu der eigentlichen Gebühreninformation gehörenden Ziffern sprachlich ausgibt. Eine solche Ansage könnte beispielsweise lauten:

Das soeben geführte Gespräch kostete 16 Gebühreneinheiten oder DM 3,68.

Nach dem Ende einer solchenAnsage gibt die Ansageeinrichtung ANSE ein Auslösesignal AUS an die Verbindungsübertragung VUe, worauf mit Hilfe der zentralen Steuerung ZST die Verbindung in nicht dargestellter, weil bekannter Weise wieder getrennt wird.

Der Teilnehmer kann aber auch von sich aus über seinen Teilnehmeranschluß TA durch Wahl einer vorgegebenen Kennziffer die Verbindungsübertragung VUe belegen, und auf diese Weise ebenfalls eine Gebührenansage zugesprochen bekommen. Da hierbei der Verbindungsaufbau nicht automatisch erfolgt, sondern durch eine Wahlhandlung des Teilnehmers,kann der Text wie folgt abgewandelt werden:

"Das zuletzt geführte Gespräch kostete usw." wenn der Teilnehmer nur die Gebührendaten einer einzigen Verbindung erfahren möchte.

Eine andere Möglichkeit besteht darin, daß der Teilnehmer die gleiche Verbindungsübertragung VUe über eine andere Kennziffer erreicht und dann bewirkt, daß ihm der Kontostand seines Summengebührenzählers mitgeteilt wird. Dabei werden in jedem Fall die Daten von der zenralen Gesprächsdatenerfassung ZGDE abgerufen und wie vorher beschrieben zur Ansageeinrichtung ANSE gebracht. Aufgrund der besonderen Kennziffer wird jedoch über die Datenleitung DL ein besonderes Kennzeichen übertragen, so daß in der Ansageeinrichtung ANSE der Ansagetext modifiziert wie folgt lauten könnte:

"Die Telefonkosten belaufen sich auf 135 Einheiten oder DM 31,05."

Da beim Aufbauen von Verbindungen zwischen Teilnehmeranschluß TA und der mit der Verbindungsübertragung VUe verbundenen Ansageeinrichtung ANSE auch die Rufnummer des betreffenden Teilnehmeranschlusses TA zur Verfügung steht, kann diese auch über die Datenleitung DL zur Ansageeinrichtung ANSE übertragen werden, so daß diese im Ansagetext erwähnt werden kann, wenn es für erforderlich gehalten wird. Wie aus der Zeichnung hervorgeht, ist die Ansageeinrichtung ANSE mit den Informations-und Sprechwegen vierdrähtig an die Verbindungsübertragung VUe angeschlossen. Dies hat den Vorteil, daß die Ansage bereits beginnen kann, bevor alle zur Ansage gehörenden Informationen vom Empfänger E der Ansageeinrichtung ANSE empfangen worden sind. Somit treten keine unzulässig langen Wartezeiten auf, wenn der Teilnehmer die Gebührenansage abhören will.

Die Struktur der Ansageeinrichtung ANSE selbst wird in diesem Zusammenhang nicht näher beschrieben, weil es bekannt ist, Steuereinrichtungen zur Erzeugung synthetischer Sprache mit

Schaltbefehlen anzusteuern, wobei beispielsweise in Speichern abgelegte Beschreibungen von Lautelementen ausgelesen werden. Die Sprachsyntheseeinrichtung SSY erzeugt entsprechend der angebotenen Codierung Sprachsignale in analoger Form, die kontinuierlich über den aufgebauten Verbindungsweg zum Teilnehmer gelangen.

Die für den automatischen Aufbau einer Verbindung zur Gebührenansage notwendigen Kennzeichnung der ausgelösten Verbindung kann auf verschiedene Arten erfolgen. Vom Teilnehmeranschluß TA aus kann schon zu Beginn der Verbindung durch eine besondere Belegungsprozedur für die Amtsverbindung, beispielsweise durch Betätigen einer Taste T oder durch Wahl einer anderen als der üblichen Kennziffer, bewirkt werden, daß das besondere Kennzeichen in den in der zentralen Steuereinrichtung ZST befindlichen Verbindungsspeicher eingetragen wird. Der Teilnehmer hat auch die Möglichkeit, während des Gesprächs durch eine vorübergehende Rückfrageschaltung mit anschließender Kennziffernwahl das besondere Kennzeichen nachträglich einzubringen. Je nach Ausführungsart der Vermittlungsanlage kann die besondere Kennzeichnung einer Verbindung auch bedeuten, daß es sich um ein Privatgespräch handelt. Wenn die besondere Kennzeichnung nicht gleichbedeutend ist mit einem Privatgespräch, ist es auch möglich, die zentrale Steuerung ZST so einzustellen, daß die besondere Kennzeichnung generell in alle Verbindungen eingebracht wird, so daß eine Ansage immer erfolgt. Dies könnte sinnvoll sein, wenn den Teilnehmern ein kostenbewußtes Telefonieren nahegebracht werden soll, weil dann immer im Anschluß einer Verbindung die entstandenen Kosten mitgeteilt werden. Das besondere Kennzeichen kann auch in Abhängigkeit der Berechtigungsklasse des eine möglicherweise gebührenpflichtig werdenden Verbindung aufbauenden Teilnehmers abhängig sein. Es ist außerdem möglich, das automatische Aufbauen einer Verbindung zum Zweck der Gebührenansage von der Höhe der Gebühr abhängig zu machen, die beim vorher geführten Gespräch entstanden ist. Damit kann beispielsweise erreicht werden, daß eine Gebührenanage unter bleibt,.wenn bei einem Ortsgesprach nur ein einziger Gebuhrenimpuls verursacht wurde.

**Ansprüche**

1. Verfahren zur Mitteilung von Gesprächsgebühren an Teilnehmer von Fernsprechvermittlungsanlagen, insbesondere Fernsprechnebenstellenanlagen mit zentraler Steuerung und zentraler Gesprächsdatenerfassung, wobei von den Teilnehmern selbst Gesprächsverbindungen aufgebaut werden und die für jede Verbindung anfallenden Gesprächsdaten automatisch erfaßt werden,

dadurch gekennzeichent,

daß nach Beenden einer besonders gekennzeichneten, gebührenpflichtigen Gesprächsverbindung von der zentralen Steuerung (ZST) aus automatisch eine Verbindungsübertragung (V-Ue) belegt wird, der betreffende Teilnehmeranschluß (TA) angerufen und mit der Verbindungsübertragung (V-Ue) verbunden wird, an die eine Ansageeinrichtung - (ANSE) angeschlossen ist, daß die von der gerade beendeten Gesprächsverbindung stammenden Gebührendaten zusammen mit einem Ansagekennzeichen von der zentralen Steuerung (ZST) oder der zentralen Gesprächsdatenerfassung (ZGDE) aus über die Verbindungsübertragung (VUe) zur Ansageeinrichtung (ANSE) übertragen werden, worauf in der Ansageeinrichtung (ANSE) ein Ansagetext mit Angabe der Gebühreneinheiten und/oder Geldbeträge zusammengestellt und dem Teilnehmer übermittelt wird.

2. Verfahren nach Anspruch 1,

dadurch gekennzeichnet,

daß die besondere Kennzeichnung der Gesprächsverbindung durch eine andersartige Belegungsprozedur (Kennziffernwahl, Schaltkennzeichen mit Taste) der Externleitung zu Beginn des Verbindungsaufbaues vorgenommen wird.

3. Verfahren nach Anspruch 1,

dadurch gekennzeichnet,

daß die besondere Kennzeichnung der Verbindung während des Gespräches durch eine vorübergehende Rückfrage mit Kennziffernwahl erreicht wird.

4. Verfahren nach Anspruch 1,

dadurch gekennzeichnet,

daß die besondere Kennzeichnung der Verbindung besagt, daß es ein Privatgespräch ist.

5. Verfahren nach Anspruch 1,

dadurch gekennzeichnet,

daß die besondere Kennzeichnung der Verbindung in Abhängigkeit von der Berechtigungsklasse des anrufenden Teilnehmeranschlusses (TA) geschieht.

6. Verfahren nach Anspruch 1,

dadurch gekennzeichnet,

daß die besondere Kennzeichnung auch generell in alle Verbindungen einbringbar ist.

7. Verfahren nach Anspruch 1,

dadurch gekennzeichnet,

daß die besondere Kennzeichnung automatisch vorgenommen wird, wenn die Gesprächsgebühr einen vorbestimmten Betrag überschreitet.

8. Verfahren nach Anspruch 1,

dadurch gekennzeichnet,

daß die Ansageeinrichtung (ANSE) vierdrähtig an die Verbindungsübertragung (VUe) angeschlossen ist.

9. Verfahren nach Anspruch 1,

dadurch gekennzeichnet,

das zur Übermittlung der Gebührendaten von der Verbindungsübertragung (VUe) zur Ansageeinrichtung (ANSE) eine Sendeeinrichtung (S) und eine Empfangseinrichtung (E) vorgesehen sind, die nach dem bei Tastwahl eingesetzten Mehrfrequenzverfahren (MFV) arbeiten und Daten der Ansageeinrichtung (ANSE) wortparallel anbieten.

10. Verfahren nach Anspruch 1,

dadurch gekennzeichnet,

daß die automatisch aufgebaute Ansageverbindung von der Verbindungsübertragung (VUe) selbsttätig ausgelöst wird, wenn die Ansage beendet ist.

11. Verfahren nach Anspruch 1,

dadurch gekennzeichnet,

daß der Teilnehmer von seinem Teilnehmeranschluß (TA) aus die Daten des zuletzt geführten Gespräches durch Wahl von Kennziffern jederzeit abfragen kann, wobei die mit der Ansageeinrichtung (ANSE) verbundene Verbindungsübertragung (VUe) belegt wird.

12. Verfahren nach Anspruch 11,

dadurch gekennzeichnet,

daß der Teilnehmer von seinem Teilnehmeranschluß (TA) aus den Stand eines Summengebührenspeichers abfragen kann, indem er eine dazu bestimmte Rufnummer oder Kennziffer wählt.

13. Verfahren nach Anspruch 1,

dadurch gekennzeichnet,

daß die Ansageeinrichtung (ANSE) eine Sprachsynthesesteuerung (SSY, SE) enthält, womit künstliche Sprache erzeugt wird.

0 198 177